# EUROPEAN PATENT SPECIFICATION

(11) **EP 4 584 771 B1**
(45) Date of publication and mention of the grant of the patent: **27.05.2026**
(21) Application number: 22782466.1
(22) Date of filing: 07.09.2022
(51) Int. Cl.: G08G 1/00, G08G 1/16, G08G 1/123, G01C 21/26

(54) **A METHOD FOR DETERMINING WHETHER A VEHICLE IS DRIVING IN, OR TOWARDS A TARGET AREA**
VERFAHREN ZUR BESTIMMUNG, OB EIN FAHRZEUG IN ODER ZU EINEM ZIELBEREICH FÄHRT
PROCÉDÉ POUR DÉTERMINER SI UN VÉHICULE CIRCULE DANS UNE ZONE CIBLE OU SE DIRIGE VERS UNE ZONE CIBLE

(43) Date of publication of application: 16.07.2025
(73) Proprietor: Volvo Autonomous Solutions AB, 405 08 Göteborg (SE)
(72) Inventor: HAGVALL, Linus, 418 74 Göteborg (SE); BERGQUIST, Stefan, 417 27 Göteborg (SE); NILSSON, Peter, 436 54 Hovås (SE)
(74) Representative: Valea AB
(86) International application number: PCT/EP2022/074810
(87) International publication number: WO 2024/051934

(56) References cited:
- EP-A1- 1 202 234
- US-A1- 2004 102 896

## Description

### TECHNICAL FIELD

The invention relates to a method for determining whether a vehicle is driving in, or towards a target area

The invention can be applied in heavy-duty vehicles, such as trucks, buses, marine vessels, and construction equipment. The invention can be applied to autonomous vehicles or for manually controlled vehicles for use when positioning and/or handling how to operate a vehicle in the target area.

### BACKGROUND

Positioning of a vehicle can be performed by a number of different methods. A commonly used method is using a Global Navigation Satellite System (GNSS). Another used method is matching a point-cloud reading from a Light Detection and Ranging (Lidar) sensor with a pre-recorded map, which is referred to as scan matching. Another method may be to use a camera to detect surroundings of a vehicle. Often e.g., in particular for autonomous vehicles, several methods are used in combination to achieve a higher reliability. However, even if positioning methods are combined, it is still hard to determine that the solution is reliable enough. First of all, each used positioning method source must have high performance on its own, such as high enough accuracy, precision, reliability, and ability to deliver the position with a fast enough response. Such high performance may not always be possible to achieve. Moreover, the methods should preferably be independent, meaning that they don't have common cause of failures. For example, a Lidar and a camera could both get problems in dark and rainy weather, meaning that there are situations where both sources could fail to work reliably at the same time.

For many applications, in particular for a vehicle operating in a confined or partially confined area, there may be different requirements such as safety requirement, e.g., speed limits etc. for different areas. In order to be able to take advantage of this it is necessary to be able to determine that a vehicle is in the current area with sufficient integrity. Hence, it is possible to use positioning systems to determine a position of the vehicle and then check if the vehicle is in a specific area or not. However, it is difficult and expensive to build positioning systems which can estimate a continuous position with a high enough integrity and low enough fault rate. This is since the positioning sources may not achieve high enough performance and may be subject to same types of failures.

EP1202234 discloses a tracking system that tracks the location, movement, and destination of vehicles. In particular, the system tracks a vehicle distance to a target destination.

Hence, there is an ongoing strive to more efficiently determine where a vehicle is driving.

### SUMMARY

An object of the invention is to improve efficiency in determining a driving area of a vehicle.

The object is achieved by a method according to claim 1.

In this way, it is possible to determine the target area based on the at least one driving parameter, such as how the vehicle is driving, e.g., turning, without having to only rely on multiple different expensive sensor systems. This is since it is possible to map areas such as the target area with driving conditions such as the at least one driving condition. As long as the at least one driving parameter has not fulfilled the at least one driving condition, it can be determined that the vehicle is not driving in or towards the target area. Thereby, a reliable method for determining where the vehicle is not driving is achieved without having to rely only on expensive sensors. In this way, it may be deduced with high reliability that the vehicle is not driving in the target area. When it is determined that the at least one driving parameter fulfils the at least one driving condition, it can instead be determined that the vehicle is driving in, or towards the target area, at least with some probability. In this way, any safety precautions needed for the target area can be made.

Determining whether the vehicle is driving in, or towards, the target area comprises determining that the vehicle is driving in, or towards, the target area by determining that the at least one driving parameter fulfils the at least one driving condition.

In these embodiments, it may not be reliably determined where the vehicle is driving, and hence, a safe determination may be to determine that the vehicle is driving in, or towards the target area. Using this information, any necessary operations for driving in or towards the target area may be performed.

Determining whether the vehicle is driving in, or towards, the target area may optionally comprise determining that the vehicle is not driving in, or towards, the target area by determining that the at least one driving parameter does not fulfil the at least one driving condition. In this way, it may be deduced with high reliability that the vehicle is not driving in the target area.

Optionally, the at least one driving condition is defined by turning characteristics of driving on a road segment, which road segment is part of, or leads towards, the target area .

In this way, it is possible to define driving on a road segment part of, or leading to the target area by means of its turning characteristics. Thereby, when the vehicle has not turned as defined by the turning characteristics, it can reliably be deduced by only using turning manoeuvres made by the vehicle, that the vehicle is not driving in, or towards, the target area. When the vehicle turns in a similar manner to the defined turning characteristics, e.g., at least a predefined angle in one or more directions, it can be deduced that the at least one driving condition is fulfilled and thereby the vehicle may be driving in, or towards, the target area.

Optionally, the turning characteristics is defined at least partly by one or more curvatures of the road segment .

In this way, a unique or rare shape of the road segment, and consequently how a vehicle is required to turn when travelling the one or more curvatures of the road segment can be used to more accurately determine whether that the vehicle is driving in, or towards, the target area.

Optionally, the turning characteristics is defined at least partly by one or more obstacles arranged in the road segment.

In this way, it is possible to more flexibly define target areas by placing out the one or more obstacles in the road segment. In this way, it is possible to arrange unique or at least rare turning requirements for the road segment such that when the vehicle travels around the one or more obstacles, a unique or rare turning motion may be required and can thus be used to more accurately determine whether the vehicle is driving in, or towards, the target area

Optionally, the turning characteristics is defined at least partly by a chicane of the road segment, wherein the chicane is arranged to require the vehicle to turn at least twice in at least two different directions to drive passed the chicane.

In this way, high reliability is achieved when determining whether that the vehicle is driving in, or towards, the target area. This is since the chicane requires the vehicle at least to turn at least twice in the at least two different directions to drive passed the chicane, and thereby a unique turning motion is required to drive passed the chicane. The unique turning motion can thereby be used to more reliably determine whether the vehicle is driving in, or towards, the target area. Furthermore, the turning motion of turning at least twice in at least two different directions as required to drive passed the chicane are in different directions and are thereby easy to distinguish from each other.

Optionally, determining whether the at least one driving parameter fulfils the at least one driving condition comprises determining whether the vehicle has driven passed the chicane. In this way, it can be determined more reliably where the vehicle is located, or not located, and thereby it can also be determined more reliably whether the vehicle is, or is not, driving in the target area.

The at least one driving condition comprises at least one required turning angle, and wherein determining whether the at least one driving parameter fulfils the at least one driving condition comprises determining whether the at least one driving parameter exceeds the at least one required turning angle.

In this way, a more efficient and reliable manner of determining whether the vehicle is driving in, or towards, the target area is achieved. This is since when the at least one required turning angle is exceeded, it is determined that the vehicle has turned at least by a certain amount, and thereby it can be deduced that the vehicle have likely turned towards the target area. The information may also be used to deduce where the vehicle have not driven. In a similar manner, when the required turning angle is not exceeded, it can be reliably determined that the vehicle is not driving in, or towards the target area.

Optionally, the at least one required turning angle comprises a series of consecutive required turning angles. In other words, the vehicle may need to turn two or three times by at least a predetermined angle such as an 8 or 10 degree wheel angle

In this way, it is possible to obtain more accurate information of a turning motion of the vehicle, which thus improves the accuracy of determining whether the vehicle is driving in, or towards, the target area.

Optionally, the at least one driving parameter of the vehicle is indicative of any one or more out of: a yaw rate of the vehicle, a steering wheel angle of the vehicle, at least one wheel angle of the vehicle, a lateral acceleration of the vehicle, and dead-reckoning data of the vehicle.

In this way, it is possible to flexibly use which at least one drive parameter that is most efficient, accurate and/or is required by the at least one driving condition. For example, this allows any suitable pattern matching from a driving parameter of the vehicle to determine whether the vehicle fulfils the at least one driving condition.

Optionally, the method further comprises:
when determining that the at least one driving parameter fulfils the at least one driving condition, adjusting an operation of the vehicle, based on the target area.

When determining that the vehicle is driving towards or in the target area, requirements associated with the target area may be taken into account when adjusting the operation of the vehicle. This increases safety when the vehicle operates in the target area.

Optionally, adjusting the operation of the vehicle comprises obtaining a safety level of the target area, and adjusting the operation of the vehicle based on the obtained safety level.

For example, when the target area is an area associated with a high safety level, the vehicle may be adjusted decrease its maximum allowed speed and/or to turn on pedestrian detection. A high safety level may be a safety level that is above a threshold. Additionally or alternatively, a high safety level may indicate that there are pedestrians or manually driven vehicles in the target area. In this way, the vehicle can adapt its operations based on the safety level.

Optionally, adjusting the operation of the vehicle comprises triggering any one or more out of:
- a reduced maximum speed of the vehicle,
- an emergency stop of the vehicle,
- an activation of one or more alerting lights on the vehicle,
- a sound alert of the vehicle,
- an activation of an obstacle avoidance system of the vehicle, and
- a reconfiguration of one or more sub-systems of the vehicle.

Optionally, the least one driving parameter of the vehicle is at least partially obtained over a predefined time period and/or over a predefined distance driven by the vehicle.

In other words, only driving parameters within the predefined time period and/or over the predefined distance driven by the vehicle is taken into account when determining whether the at least one driving parameter fulfils the at least one driving condition. In this way, a more accurate and reliable determination of whether the vehicle drives in, or towards the target area can be made as the at least one driving parameter of the vehicle need to be actuated within the predefined time period and/or over the predefined distance driven by the vehicle. This results in a more efficient method for distinguishing different driving parameter patterns, such as performing consecutive turning manoeuvres of the vehicle.

Optionally, the vehicle is at least partly autonomous. In this way, the at least partly autonomous vehicle can autonomously take decisions based on the determining of whether the vehicle is in or driving towards the target area.

According to a second aspect, there is provided a control unit configured to perform the method according to the first aspect. The first control unit may be an Electronic Control Unit (ECU). Advantages and effects of the control unit are largely analogous to the advantages and effects of the method according to the first aspect. Further, all embodiments of the control unit are applicable to and combinable with all embodiments of the method according to the first aspect, and vice versa.

According to a third aspect, there is provided a vehicle comprising the first control unit according to the second aspect. Advantages and effects of the vehicle are largely analogous to the advantages and effects of the method according to the first aspect and/or the control unit of the second aspect. Further, all embodiments of the vehicle are applicable to and combinable with all embodiments of the method according to the first aspect, and vice versa.

According to a fourth aspect, there is provided a computer program comprising program code means for performing the steps of the method(s) according to the first aspect, when said program is run on a computer. Advantages and effects of the computer program are largely analogous to the advantages and effects of the first aspect. Further, all embodiments of the computer program medium are applicable to and combinable with all embodiments of the corresponding method, and vice versa.

According to a fifth aspect, there is provided a computer program medium carrying a computer program comprising program code means for performing the steps of the method according to the first aspect, when said program is run on a computer. Advantages and effects of the computer program medium are largely analogous to the advantages and effects of the first aspect. Further, all embodiments of the computer program medium are applicable to and combinable with all embodiments of the corresponding method, and vice versa.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
- Fig. 1: is a schematic of a vehicle driving towards a target area.
- Fig. 2: is a flowchart illustrating a method.
- Fig. 3: is an illustration of an example scenarios of a vehicle driving towards a target area.
- Fig. 4: is an illustration of an example scenarios of a vehicle driving towards a target area.
- Fig. 5a: is an illustration of an example scenario of fulfilling a driving condition.
- Fig. 5b: is an illustration of an example scenario of not fulfilling a driving condition.
- Figs. 6a-6b: are schematic block diagrams illustrating a control unit.

### DETAILED DESCRIPTION OF EXAMPLE EMBODIMENTS OF THE INVENTION

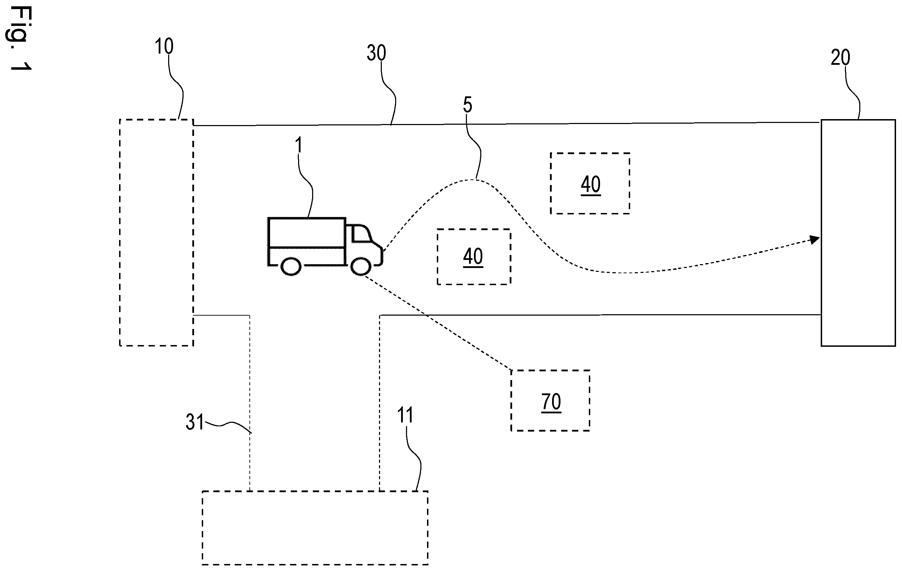

**Fig 1****.** Illustrates a **vehicle 1** driving on a **road segment 30.** The vehicle 1 may be at least partially autonomous but may also be manually driven by a driver in the vehicle, or remotely controlled. The vehicle 1 may have driven from an **initial area 10,** and embodiments herein may relate to determining whether or not the vehicle 1 is driving towards, or in a **target area 20.** The road segment 30 may be connected to the target area 20. The road segment 30 may be a road, path, or any suitable surface for the vehicle 1 to drive on. The embodiments herein may be part of a confined or at least partly confined area, e.g., a work site, a warehouse, etc. In some embodiments, **one or more obstacles 40** may be arranged in the road segment 30. The one or more obstacles 40 may be arranged to partially block a path to the target area 20 for the vehicle 1, such that the vehicle 1 need to turn around the one or more areas using one or more turning manoeuvres. Additionally or alternatively, the one or more obstacles 40, may be arranged such that it is not possible to reach, i.e. drive to, the target area 20 without driving and turning around at least one of the one or more obstacles 40. Additionally or alternatively (not show in Fig. 1.), the road segment may comprise one or more curvatures leading to the target area 20, also requiring one or more turning manoeuvres of the vehicle 1. Using the road segment 30, the vehicle 1 may have the option of driving to the target area 20, but may also have other options, e.g., returning to the initial area 10, and/or using an **alternative road segment 31,** connected with the road segment 30 to drive to an **alternative area 11.** As many different areas and options exists, it may not always be possible to know exactly where the vehicle 1 is located with high reliability, especially if some or all of the sensors for positioning the vehicle 1 is failing. This is particularly true for when the vehicle 1 is autonomous and cannot rely on a driver of the vehicle. Thus, embodiments herein relates to determining whether the vehicle 1 is driving towards, or in the target area 20. In particular, embodiments herein can determine with high reliability when the vehicle is not driving in or towards the target area 20

Embodiments herein relate to exploiting predefined information of that the vehicle 1 needs to travel to the target area 20 by approximately the illustrated **trajectory 5.** The trajectory 5 can be modelled at least partially as at least one driving parameter of the vehicle 1, i.e. some identifiable, e.g., uniquely identifiable, driving and/or turning motions of the vehicle 1. It may then be possible to associate the target area 20 with at least one driving condition. When the at least one driving condition is not fulfilled, this indicates that the vehicle 1 is not driving towards, or in the target area 20. In contrast, when the at least one driving condition is fulfilled, this indicates that the vehicle 1 is likely driving towards, or in the target area 20. Hence, it may be useful to assume that the vehicle 1 is driving towards, or in the target area 20. The at least one driving condition may be dependent on predefined information of where the vehicle 1 is travelling from, e.g., from the initial area 10, or may be dependent on which road segment the vehicle 1 is travelling on. In this way, similar driving conditions can be used for distinguishing travelling to different areas. A mapping of driving conditions to different areas may be stored in a suitable manner, e.g., in a memory or a database.

As an example of determining whether the vehicle 1 is driving towards or in the target area 20, as illustrated in Fig. 1 will now follow. As illustrated in Fig. 1., to drive passed the one or more obstacles 40, two turns in opposite directions is required to reach the target area 20. In the example, the two turns may respectively need to be turns with at least a respective predefined turning angle threshold for the vehicle 1. In this way, the at least one driving condition to be fulfilled may be that the turns shall each be in a respective predefined direction with the respective predefined turning angle threshold. When the at least one driving parameter of the vehicle 1 indicates a turning motion of the vehicle such that the turns are performed in the respective predefined directions and exceed the respective predefined turning angle thresholds, it can thus be determined that the vehicle 1 is driving in, or towards the target area 20, at least with some probability. When the at least one driving parameter of the vehicle 1 does not indicate such turning motion of the vehicle, i.e. no turns are performed in the respective predefined directions and/or do not exceed the respective predefined turning angle thresholds, it can thus be determined with high reliability that the vehicle 1 is not driving in, or towards the target area 20.

Embodiments herein may be performed at least partially by a **control unit 70.** The control unit 70 may be comprised in any suitable location, e.g. in the vehicle 1 or in any suitable remote location. If at a remote location, the control unit 70 may be arranged to be able to control the vehicle 1 remotely. The control unit 70 may be an ECU. The control unit 70 may store a mapping of the at least one driving condition and the target area 20 in a database or in its memory.

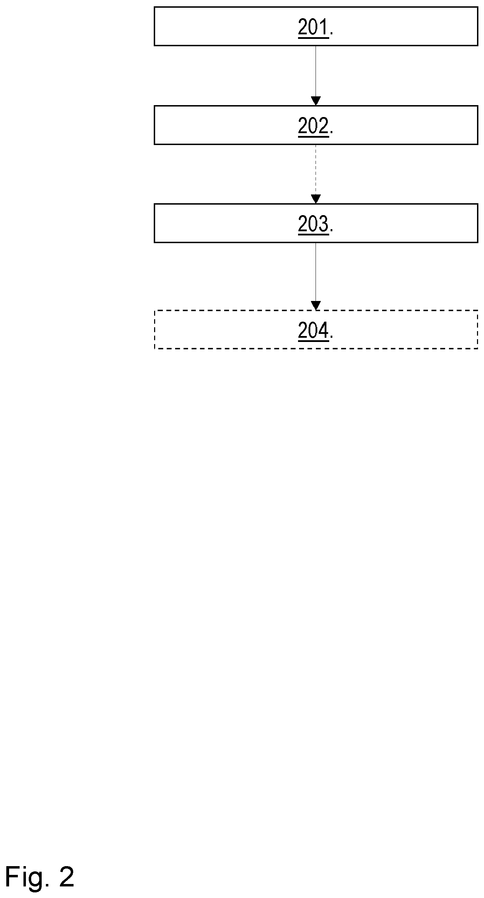

**Fig. 2** illustrates a method for determining whether the vehicle 1 is driving in, or towards the target area 20. The following actions may be taken in any suitable order and may be combined with any other embodiments and/or examples herein. The method may be performed by the control unit 70, e.g. as part of the vehicle 1. The vehicle 1 may be at least partly autonomous.

### Action 201

The method comprises obtaining at least one driving condition. When the at least one driving condition is not fulfilled, it is indicated that the vehicle 1 is not driving in, or towards, the target area 20. Additionally or alternatively, when the at least one driving condition is fulfilled, it is indicated that the vehicle 1 is driving in, or towards, the target area 20. When it is indicated that the vehicle 1 is driving in, or towards, the target area 20, the indication may be speculative. The at least one driving condition may comprise any suitable number of driving conditions, e.g., two, three or more driving conditions. The at least one driving condition may comprise requiring at least one driving parameter of the vehicle 1 to fulfil the at least one driving condition. For example, the at least one driving condition may require that the vehicle 1 performs a certain driving and/or turning motion to be fulfilled. This is since the certain driving and/or turning motion may be essential to reach the target area 20, e.g. as it may be needed to take appropriate turns in one or more curves and/or drive around one or more obstacle for it to be possible for the vehicle 1 to reach the target area 20. Thus, to drive to the target area 20, a trajectory may need to be followed within some margin of error, e.g. due to curves and/or obstacles. The at least one driving condition can thus indicate that when fulfilled, the vehicle 1 is within the margin of error of following or having followed the trajectory to the target area 20 and thereby it can be determined that the vehicle is likely in or driving towards the target area 20. The at least one driving condition can thus indicate that when not fulfilled, the vehicle 1 is not within the margin of error of following or having followed the trajectory to the target area 20 and thereby it can be determined with high reliability, e.g., a guarantee, that the vehicle is not in or driving towards the target area 20.

In some embodiments, the at least one driving condition is defined by turning characteristics of driving on a road segment 30. The turning characteristics may define how the vehicle 1 is required to drive to reach the target area 20, e.g., including turning manoeuvres.

The road segment 30 is part of, or leads towards, the target area 20. The turning characteristics may define, e.g., define uniquely, a driving and/or turning motion which may identify driving in, or towards the target area 20. Thus, when such a driving and/or turning motion is not performed, it is not possible to reach the target area 20. In some embodiments, the turning characteristics is defined at least partly by one or more curvatures of the road segment 30. In other words, the one or more curvatures may define at least a minimal amount of turning the vehicle 1 has to perform in the road segment 30 to reach the target area 20. If not performing the minimal amount of turning, the vehicle 1 cannot be driving towards the target area 20 as then the vehicle 1 would be driving off the road segment 30, e.g., which may be detected by other suitable means such as detecting collision and/or sensing driving off-road. The turning characteristics may thus uniquely define a driving and/or turning motion using the required turns in the one or more curvatures.

In some embodiments, the turning characteristics is defined at least partly by one or more obstacles 40 arranged in the road segment 30. In a similar manner to the one or more curvatures, the one or more obstacles may additionally or alternatively define at least a minimal amount of turning the vehicle 1 have to perform in the road segment 30 to reach the target area 20. If not performing the minimal amount of turning, the vehicle 1 cannot be driving towards the target area 20 as then the vehicle 1 would collide with the one or more obstacles 40 e.g., which may be detected by other suitable means such as sensors of the vehicle 1. The turning characteristics may thus define, e.g., uniquely define, a driving and/or turning motion using the required turns in the one or more curvatures.

In some embodiments, the turning characteristics is defined at least partly by a chicane of the road segment 30. A chicane as used herein comprises at least two arranged obstacles which are arranged such as to require the vehicle to turn at least twice in differing directions to drive passed the at least two arranged obstacles. In these embodiments, the chicane may be arranged to require the vehicle 1 to turn at least twice in at least two different directions to drive passed the chicane. The use of a chicane can be very efficient as the turning motion required to pass through a chicane is easily detectable and a chicane may also be simple to arrange on a road segment such as the road segment 30. Furthermore, a chicane may be arranged in different order requiring a different starting turning direction and can thereby indicate different areas. In other words, a chicane may define "S-curves" in two mirrored corresponding versions. A chicane may also be coupled with further chicanes, obstacles, or curvatures to more specifically define a required turning motion of the vehicle 1.

In some embodiments, the at least one driving condition comprises at least one required turning angle. The at least one turning angle may be a threshold for the vehicle 1 to achieve. For example, the at least one driving condition may comprise that the vehicle 1 need to turn by at least one threshold for the at least one driving condition to be fulfilled. Otherwise the vehicle 1 would drive outside the road segment 30, into the one or more obstacles 40, or simply in a completely different direction than what can possibly be the target area 20.

In some embodiments, the at least one required turning angle comprises a series of consecutive required turning angles. In other words, to fulfil the at least one driving condition, the series of consecutive required turning angles need to be performed by the vehicle 1. This allows for complex turning motions to define and map that the vehicle 1 may be driving in, or towards the target area 20. For example, a first turn may be required by the vehicle 1 in a first direction, the vehicle 1 may need to turn by an angle exceeding a first threshold. Subsequently, a second turn may be required by the vehicle 1 in a second direction e.g., different from the first direction, the vehicle 1 may need to turn by an angle exceeding a second threshold. To achieve higher accuracy and/or reliability, or if more areas need to be identifiable, this series may continue in any suitable manner with more turns. For example, the series may continue with that the vehicle 1, subsequently after the second turn, a third turn may be required by the vehicle 1 in a third direction e.g., different from the second direction, the vehicle 1 may need to turn by an angle exceeding a third threshold, to reach the target area 20.

### Action 202

The method comprises obtaining at least one driving parameter of the vehicle 1. The at least one driving parameter of the vehicle 1 may be comparable with the at least one driving condition, to determine whether or not the at least one driving condition is fulfilled.

The at least one driving parameter of the vehicle 1 may be associated with any one or more out of: a condition, operation, and/or movement of the vehicle 1, e.g., a driving motion and/or a driving motion of the vehicle 1. The at least one driving parameter may be, or be based on, any suitable parameter and/or sensor data of the vehicle 1 e.g., which may indicate that the vehicle 1 is turning.

In some embodiments, the at least one driving parameter of the vehicle 1 is indicative of any one or more out of: a yaw rate of the vehicle 1, a steering wheel angle of the vehicle 1, at least one wheel angle of the vehicle 1, a lateral acceleration of the vehicle 1, and dead-reckoning data of the vehicle 1.

In some embodiments, the least one driving parameter of the vehicle 1 is at least partially obtained over a predefined time period and/or over a predefined distance driven by the vehicle 1. In other words, the at least one driving parameter may be indicative of an instantaneous condition and/or indicative of a condition over time e.g., any one or more out of: a current amount of turning angle and/or an accumulated turning angle over time, an estimated turning radius, etc. In other words, the at least one driving parameter of the vehicle 1 may be obtained in a buffer, i.e. keeping track of the vehicle operations X meters previously travelled by the vehicle and/or X seconds earlier.

The at least one driving parameter of the vehicle 1 may be obtained by any suitable manner, e.g., by one or more sensors arranged in the vehicle 1, e.g., communicatively coupled with the control unit 70. The one or more sensors may continuously or periodically send one or more updates of the at least one driving parameter to the control unit 70. Additionally or alternatively, the control unit 70 may request the at least one driving parameter from the one or more sensors.

### Action 203

The method comprises determining whether the vehicle 1 is driving in, or towards, the target area 20 by determining whether the at least one driving parameter fulfils the at least one driving condition.

Determining whether the vehicle 1 is driving in, or towards, the target area 20 may comprise determining that the vehicle 1 is not driving in, or towards, the target area 20 by determining that the at least one driving parameter does not fulfil the at least one driving condition. In this way, it is determined that the vehicle 1 is not driving in or towards the target area 20 with high reliability. Additionally or alternatively, determining whether the vehicle 1 is driving in, or towards, the target area 20 may comprise determining that the vehicle 1 is driving in, or towards, the target area 20 by determining that the at least one driving parameter fulfils the at least one driving condition. In these embodiments, the vehicle 1 may be determined to be driving in or towards the target area 20 erroneously as sometimes the at least one driving condition may be fulfilled by other actions. However, when the target area 20 is related to certain required operations/conditions, determining when it is likely that the vehicle 1 is driving in or towards the target area 20 is sufficient to make sure these required operations are always performed and/or required conditions always met.

As an example, the at least one driving parameter may be indicative of a required driving and/or turning motion of the vehicle for the vehicle 1 to reach the target area 20. The at least one driving condition may thus be determined to be fulfilled when the at least one driving parameter indicates that the vehicle has performed at least the required driving and/or turning motion of the vehicle for the vehicle 1 to reach the target area 20. For example, it may be required that the vehicle 1 turns by a certain amount, which can be determined by assessing how the vehicle 1 is turning, e.g., by use of any one or more out of: a yaw rate of the vehicle 1, a steering wheel angle of the vehicle 1, at least one wheel angle of the vehicle 1, a lateral acceleration of the vehicle 1, and dead-reckoning data of the vehicle 1.

In embodiments where the at least one driving condition comprises the at least one required turning angle, determining whether the at least one driving parameter fulfils the at least one driving condition comprises determining whether the at least one driving parameter exceeds the at least one required turning angle, e.g., by exceeding the at least one required turning angle during a predetermined period of time, and/or exceeding the at least one required turning angle during a predetermined distance travelled by the vehicle 1.

In this way, when determined that the at least one driving parameter exceeds the at least one required turning angle, the vehicle 1 is with high probability likely to follow a trajectory towards the target area 20, and it can be deduced where the vehicle 1 is not travelling. Furthermore when determining that the at least one driving parameter does not exceed the at least one required turning angle, it can be deduced that the vehicle 20 is not driving in, or towards, the target area 20. In some embodiments, where the road segment 30 is simple and few areas to drive to exist, simple turning motions may be required and thereby it may be sufficient to only require one required turning angle, e.g., a turning angle exceeding a threshold. For some road segments, multiple required turning angles can be required. The at least one required turning angle may be 90 degrees or more.

In some embodiments, determining whether the at least one driving parameter fulfils the at least one driving condition comprises determining whether the vehicle 1 has driven passed a chicane. As driving passed a chicane requires at least two turns in different directions, it is simple and accurate to detect passing the chicane, and thus the chicane can efficiently define that when driven passed, the vehicle 1 is driving towards or in the target area 20. Similarly, when the at least two turns in different directions is not detected, e.g., part of the at least one driving parameter, it can be determined that the vehicle 1 is not driving in, or towards the target area 20.

Depending on the complexity of the road segment 30, and or a number of areas the vehicle 1 can drive to, accuracy of the determination may be affected. Similarly, depending on the complexity of the at least one driving condition, accuracy and/or reliability of the determination may be affected, e.g. how many consecutive turns are required, how big angle is required to turn, etc. Due to the accuracy affected and/or reliability, there may be some situations where it is possible to erroneously determine that the vehicle 1 is driving in or towards the target are 20. However, when combined with other sensors or positioning methods, such an error can be significantly reduced as the different methods would be completely independent. Hence, when determining that the vehicle 1 is driving in or towards the target area 20, it is considered at least probable that the vehicle 1 is driving in or towards the target area 20. When determining that the vehicle 1 is not driving in or towards the target area 20, it is considered with high reliability that the vehicle 1 is not driving in or towards the target area 20.

This achieves an efficient and reliable method for determining a driving area of the vehicle 1, or at least determining an area which the vehicle 1 is not driving in. For example, this allows to always be able to take necessary safety precautions which may be necessary for entering the target area. E.g., the target area may have pedestrians which may need the vehicle to slow down and/or to turn on some sensors. In some embodiments, depending on a predefined spatial arrangement of the road segment 30 and the target area 20, it may be possible to further determine whether the vehicle 1 is driving in the target area 20, or whether the vehicle 1 is not yet in the target area 20, and still driving towards the target area 20. For example, when fulfilling the at least one driving condition, it may be predefined which position the vehicle 1 need to have, e.g., with respect to a chicane and the target area 20, at least within some margin of error, and thereby it may also be determined whether the vehicle 1 is in the target area 20 or driving towards the target area 20.

### Action 204

In some embodiments, the method comprises, when determining that the at least one driving parameter fulfils the at least one driving condition, adjusting an operation of the vehicle 1 based on the target area 20. For example, certain operations may be associated with different areas, and thereby when it is determined that the vehicle 1 is driving in or towards the target area 20 the operation of the vehicle 1 can be adjusted. The operations required by different areas may be predefined and stored in the control unit 70.

In some embodiments, adjusting the operation of the vehicle 1 comprises obtaining a safety level of the target area 20, and adjusting the operation of the vehicle 1 based on the obtained safety level. For example, the vehicle 1 may initially be in an area without pedestrians, and the target area 20 may have pedestrians and/or other traffic which may be associated with different safety levels.

In some embodiments, adjusting the operation of the vehicle 1 comprises triggering any one or more out of:
- a reduced maximum speed of the vehicle 1, e.g., if pedestrians and/or other vulnerable road users are known to be in the target area 20,
- an emergency stop of the vehicle 1, e.g., if the vehicle 1 is not allowed in the target area 20,
- an activation of one or more alerting lights on the vehicle 1, e.g., if pedestrians and/or other vulnerable road users are known to be in the target area 20,
- a sound alert of the vehicle 1, e.g., if pedestrians and/or other vulnerable road users are known to be in the target area 20,
- an activation of an obstacle avoidance system of the vehicle 1, e.g., to turn on pedestrian detection systems, and
- a reconfiguration of one or more sub-systems of the vehicle 1, e.g., different braking strategies or braking configurations may be necessary when pedestrians are present in the target area 20.

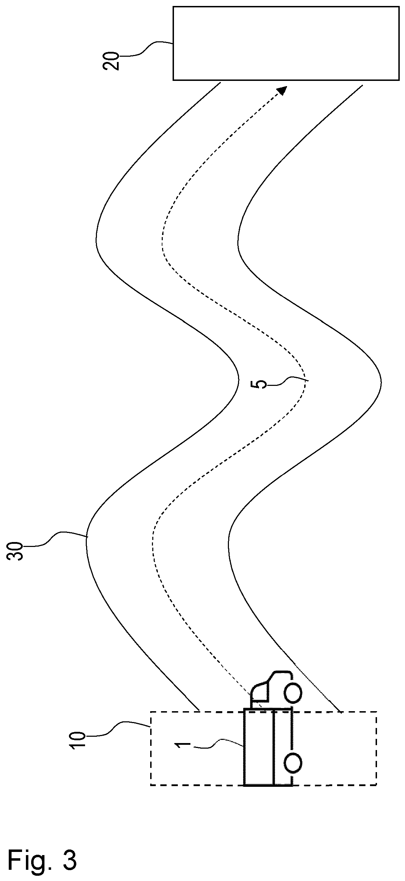

**Fig. 3** illustrates an example scenario of the vehicle 1 is travelling on the road segment 30 when the road segment 30 comprises one or more curvatures. The vehicle 1 is in this scenario required to drive the trajectory 5 to reach the target area 20 which thereby requires the vehicle to take at least three turns. Thereby, in this example scenario, the vehicle 1, to drive from the initial area 10, to the target area 20, the vehicle 1 needs to take three distinct turns in different directions. The turning motion of the vehicle taking these turns may uniquely define travelling towards or in the target area 20, and thereby the at least one driving condition may be fulfilled when the vehicle 1 has turned these three distinct turns. In a corresponding manner, the at least one driving condition may not be fulfilled unless the vehicle 1 has turned these three distinct turns.

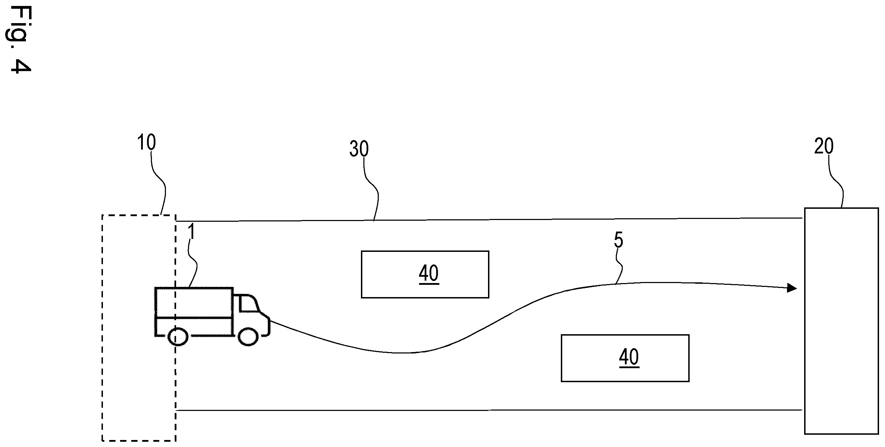

**Fig. 4** illustrates an example scenario of the vehicle 1 travelling on the road segment 30 when the road segment 30 comprises the one or more obstacles 40. In this scenario, the one or more obstacles 40 is arranged as a chicane, however, the one or more obstacles 40 may be arranged in any other suitable manner, e.g., comprising more or fewer obstacles. The vehicle 1 is in this scenario required to drive the trajectory 5 to reach the target area 20 which thereby requires the vehicle to take at least two distinct turns in different directions. Thereby, in this example scenario, the vehicle 1, to drive from the initial area 10, to the target area 20, the vehicle need to turn the two turns in different directions. The turning motion of the vehicle 1 making these turns may uniquely define travelling towards or in the target area 20, and thereby the at least one driving condition may be fulfilled when the vehicle 1 has turned these two distinct turns. In a corresponding manner, the at least one driving condition may not be fulfilled unless the vehicle 1 has turned these two distinct turns.

The use of the one or more obstacles 40 as in the example provides an efficient way of arranging and/or creating turning motions required by the vehicle 1, which may be mapped to different areas. This is since the one or more obstacles 40 may at least partially be mobile such that they can be re-arranged to created different distinct turning motions which can be used as patterns to determine that the vehicle 1 is driving to the target area 20.

The use of the one or more obstacles 40 as exemplified in Fig. 4 may be combined with the use of a road segment with one or more curvatures as in Fig. 3., which thereby requires complex turning motions for the vehicle 1 to reach the target area 20 which may be required to be fulfilled as part of the at least one driving condition. A complex turning motion as used herein may comprise at least three different turning motions in different directions.

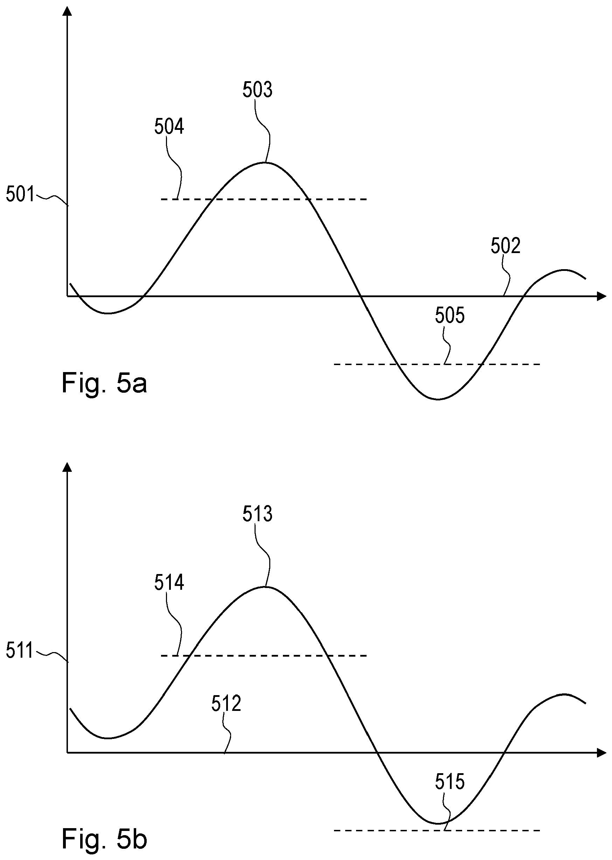

**Fig. 5a** illustrates an example scenario of the vehicle 1 wherein a wheel angle, e.g., a right or left wheel angle of the vehicle 1, is shown as a **curve 503,** wherein time is on the **X-axis 502,** and wherein an angle is on the **Y-axis 501.** The curve 503 may be seen as the at least one driving parameter, e.g., as in action 202. A first **wheel angle threshold 504** and a **second wheel angle threshold 505** may be part of the at least one driving condition, e.g., as in action 201. This means that when the first wheel angle threshold 504 have been exceeded and subsequently when the second wheel angle threshold 505 have been exceeded, it can be determined that the vehicle is driving in, or towards, the target area 20, e.g., as in action 203. As seen in Fig. 5a., the curve 503 exceeds the first wheel angle threshold 504, and then exceeds the second wheel angle threshold 505, thus it can be determined that the vehicle 1 is likely to drive in or towards the target area 20.

**Fig. 5b** illustrates an example scenario of the vehicle 1 wherein a wheel angle, e.g., a right or left wheel angle of the vehicle 1, is shown as a **curve 513,** wherein time is on the **X-axis 512,** and wherein an angle is on the **Y-axis 511.** The curve 513 may be seen as the at least one driving parameter, e.g., as in action 202. A first **wheel angle threshold 514** and a **second wheel angle threshold 515** may be part of the at least one driving condition, e.g., as in action 201. This means that when the first wheel angle threshold 514 have been exceeded and subsequently when the second wheel angle threshold 515 have been exceeded, it can be determined that the vehicle is driving in, or towards, the target area 20, e.g., as in action 203. As seen in Fig. 5b., the curve 513 exceeds the first wheel angle threshold 514, but does not exceed the second wheel angle threshold 515. Thus it can be determined, with high reliability, that the vehicle 1 is not driving in or towards the target area 20.

### Further embodiments and variations

Embodiments herein may comprise the following steps, e.g., as part of any one or more out of the actions 201-204 above:
1) Measure, or build, features of a certain turning area along a path, e.g., the turning motion required in the road segment 30 to reach the target area 20. The features may need to be distinguishable from features measured to determine other areas, e.g., the alternative area 11, to avoid undesired interventions and/or detections.
2) Calculate at least one steering angle, or equivalent/similar measurement, needed to be able to make one or more turns according to the measurements in step 1, without collision and/or driving off the road, e.g., the road segment 30. The at least one steering angle or equivalent/similar measurement may be part of the at least one driving condition, e.g., as in action 201.
3) During operation, e.g., while performing any one or more out of the actions 201-203: Monitor for when the calculated at least one steering angle or equivalent/similar measurement is used, and determine that the vehicle 1 may have passed the turn indicated by the at least one steering angle or equivalent/similar measurement. In this way, it may be determined that the vehicle 1 is driving in or towards the target area 20, e.g., as in action 203. When the vehicle 1 has not passed the turn indicated by the at least one steering angle or equivalent/similar measurement, it may be determined that the vehicle 1 is not driving in or towards the target area 20, e.g., as in action 203.
4) When determined that the vehicle 1 is likely driving in or towards the target area 20, take a desired action, e.g., as in action 204. e.g. reduce a speed of the vehicle 1.

The steps 1)-4) above may be performed by the control unit 70.

To be able to take certain turns on a site operated by the vehicle 1, it may be necessary to use certain predefined steering angles, e.g., as part of the at least one driving condition as in action 201. For example, a 90-degree curve with 10 metre radius and 5 metre road width would require a relatively high steering angle to not crash into the outer roadside. In an example below, the required steering angle is referred to as X, e.g., as part of the at least one driving condition of action 201. As an example X may be 8-10 degrees or any other suitable degree number. X may depend on the environment and/or vehicle.

A steering angle, monitored of the vehicle 1, e.g., during autonomous operation, may in some scenarios imply that: as long as a steering angle larger than X has not been used, then the vehicle 1 has not passed the above-mentioned curve and can be determined to not be travelling in or towards the target area 20. Steering angle and/or equivalent/similar measurements may comprise a measurement with a robust solution to estimate with high integrity. I.e. these measurements are very probably to be accurate and will be unlikely to fail. In many scenarios it may be possible for the vehicle 1 and/or the control unit 70 to estimate the vehicle's steering angle but not be able to determine the position of the vehicle using other legacy position sensors, at least not with the required robustness/reliability. Hence, the embodiments herein provide a way to improve the reliability of determining a position of the vehicle 1, in particular a driving area with high robustness/reliability.

As an example, there may be a need to drive slowly, e.g. below a threshold, in a certain area and that area is behind a 90-degree curve, e.g., the target area 20. This would mean that it is possible to drive fast, e.g., with a speed higher than a threshold, until the vehicle 1 has used a steering angle above X. After the steering angle has been above X, restrictions may be activated which are necessary for the aforementioned area e.g., as in action 204.

In practice there may be several areas with sharp turns and, thus for some embodiments it may not be desirable to drive slowly and/or activate restrictions when passing every sharp turn. For such scenarios, embodiments herein may comprise a use of a unique or rare turning patterns, i.e. where it is instead required in the at least one driving condition that the vehicle 1 completes a certain number of steering angles, e.g., two or three, within a certain distance, e.g., 30, 50, or 100 metres.

In some embodiments, it may be arranged for the vehicle 1 to follow a path required by a chicane design of obstacles to reach the target area 20. In these embodiments, to fulfil the at least one driving condition it is thus required by the vehicle 1 to make two turns above a certain steering angle within a certain distance to avoid a collision. The result is that it is possible to be determined that the chicane is not passed unless the vehicle 1 have first steered at least a first required angle in one direction, e.g., to the left, and then within a predefined distance, turned in a different direction, e.g., to the right, by at least one second required angle.

Embodiments herein may not be able to provide a guarantee that the chicane is passed when detecting the steering pattern, i.e. determining that the at least one driving parameter fulfils the at least one driving condition. Embodiments herein may however comprise inverted features, e.g., a guarantee, of that the vehicle 1 has not passed the chicane when not detecting the pattern i.e. determining that the at least one driving parameter does not fulfil the at least one driving condition. As such the steering pattern can be used to increase restrictions related to the target area 20 for the vehicle 1 when it is determined that the at least one driving parameter fulfils the at least one driving condition . For example any one or more out of: may be performed
- Reducing a speed of the vehicle 1,
- Stopping the vehicle 1, e.g. chicanes could be placed on roads going out from an autonomous operating zone, then the vehicle 1 may be forced to stop if it would accidently follow that road, and/or
- Activating a safety function, e.g. an obstacle avoidance system

The solution of embodiments herein provides a benefit in that it provides an opposite and/or a complementing type of feature, e.g., guarantee, from other positioning solutions, and further may be reliable to use until constant robust high integrity positioning systems are available.

Other solutions may provide guarantees that it will not have any false positives. This means that they may fail to locate the vehicle 1, but they will not locate it erroneously (or at least with a small defined error). Embodiments herein may comprise inverted or complementing features, e.g., guarantees, i.e. that they will not fail to detect that the vehicle 1 has passed a certain location, but it may detect so erroneously. In some embodiments, combining the embodiments herein with other positioning systems, e.g., scan matching, GNSS, camera localization, etc. may comprise a more complete positioning system which may always reliably provide some reliable input of where the vehicle 1 is located and/or not located.

In above examples, a steering angle, e.g., an angle of a steering wheel or a wheel of the vehicle 1, has been mentioned as a unit of measurement and is one simple realization of embodiments herein. However, there are other similar parameters can be used, e.g., as part of the at least one driving parameter. For example, embodiments herein may also apply to be based on a yaw rate of the vehicle 1, lateral acceleration of the vehicle 1, and/or a short-term dead-reckoning of the vehicle 1. Short-term dead-reckoning as used herein means a continuous estimate of a predefined distance travelled by the vehicle 1, relative position based primarily on velocity and an Inertial measurement unit (IMU) of the vehicle 1, and determining whether the at least one driving condition is fulfilled by pattern matching of an S-curve based on any of the above-mentions parameters .

Some examples above describe a solution where a peak steering angle is used in the at least one driving parameter and compare it to a threshold as part of the at least one driving condition. These embodiments may be a conservative solution as it may be necessary to maintain a certain steering angle for a predetermined time period to be able to make a certain turn. Thus, some embodiments may comprise the improvement to estimate the effect of the steering angle over time, e.g., using steering angle and velocity of the vehicle 1, to estimate how many degrees the vehicle may have turned in total over the predetermined time period. Then the angle the vehicle 1 has turned may be part of the at least one driving parameter and may be compared to a threshold as part of the at least one driving condition. When exceeding said threshold, it may be determined that the vehicle 1 is driving in or towards the target area 20.

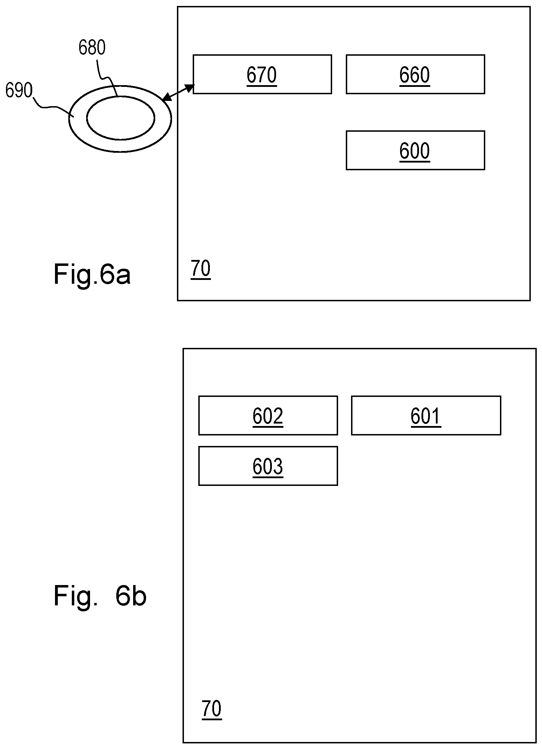

To perform the method actions described herein, the control unit 70 may be configured to determine whether the vehicle 1 is driving in, or towards the target area 20. The control unit 70 may be configured to perform any one or more of the above actions 201-204, and/or any of the other examples or embodiments herein. The control unit 70 may for example comprise an arrangement depicted in Figs. 6a and 6b.

The control unit 70 may comprise an input and output interface 600 configured to communicate with any necessary components and/or entities of embodiments herein. The input and output interface 600 may comprise a wireless and/or wired receiver (not shown) and a wireless and/or wired transmitter (not shown). The control unit 70 may be arranged in any suitable location of the vehicle 1 or arranged at suitable remote location, e.g., in a server. The control unit 70 may use the input and output interface 600 to control and communicate with sensors, actuators, suspension arrangements, subsystems, and interfaces in the vehicle 1, e.g., by using any one or more out of: CAN, ethernet cables, Wi-Fi, Bluetooth, and/or other network interfaces.

The control unit 70 may be configured to, e.g. by means of an obtaining unit 601 comprised in the control unit 70, obtain at least one driving condition, which when not fulfilled, indicates that the vehicle 1 is not driving in, or towards, the target area 20. When fulfilled, the at least one driving condition may indicate that the vehicle may be driving in, or towards the target area 20.

The control unit 70 may be configured to, e.g. by means of the obtaining unit 601 comprised in the control unit 70, obtain at least one driving parameter of the vehicle 1.

The control unit 70 may be configured to, e.g. by means of a determining unit 602 comprised in the control unit 70, determine whether the vehicle 1 is driving in, or towards, the target area 20 by determining whether the at least one driving parameter fulfils the at least one driving condition.

The control unit 70 may be configured to, e.g. by means of an adjusting unit 603 comprised in the control unit 70, when determined that the at least one driving parameter fulfils the at least one driving condition, adjust an operation of the vehicle 1 based on the target area 20.

The embodiments herein may be implemented through a processor or one or more processors, such as the processor 660 of a processing circuitry in the control unit 70 depicted in Fig. 6a, together with computer program code for performing the functions and actions of the embodiments herein. The program code mentioned above may also be provided as a computer program medium, for instance in the form of a data computer readable medium carrying computer program code for performing the embodiments herein when being loaded into the control unit 70. One such computer readable medium may be in the form of a memory stick. The computer program code may furthermore be provided as pure program code on a server and downloaded to the control unit 70.

The control unit 70 may further comprise a memory 670 comprising one or more memory units. The memory 670 comprises instructions executable by the processor in control unit 70. The memory 670 is arranged to be used to store e.g. information, indications, data, configurations, sensor data, the at least one condition, the at least one driving parameter, buffers, positioning information, scanned surroundings of the vehicle 1, and applications to perform the methods herein when being executed in the control unit 70.

In some embodiments, a computer program 680 comprises instructions, which when executed by a computer, e.g. the at least one processor 660, cause the at least one processor of the control unit 70 to perform the actions 201-204 above.

In some embodiments, a computer-readable storage medium 690 comprises the respective computer program 680. The computer-readable storage medium 690 may comprise program code for performing the steps of any one of actions 201-204 above when said program product is run on a computer, e.g. the at least one processor 660.

Those skilled in the art will appreciate that the units in the control unit 70 described above may refer to a combination of analogue and digital circuits, and/or one or more processors configured with software and/or firmware, e.g. stored in the control unit 70, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC). Furthermore, the control unit 70 may comprise any suitable specialized circuits.

It is to be understood that the present invention is not limited to the embodiments described above and illustrated in the drawings; rather, the skilled person will recognize that many changes and modifications may be made within the scope of the appended claims. Furthermore, all above embodiments and/or examples may be combined in any suitable manner.

It is to be understood that the present invention is not limited to the embodiments described above and illustrated in the drawings; rather, the skilled person will recognize that many changes and modifications may be made within the scope of the appended claims.

## Claims

1. A computer-implemented method for determining whether a vehicle (1) driving on a road segment (30) which road segment (30) is part of, or leads towards, a target area (20), is driving in, or towards the target area (20), the method comprising:
- obtaining (201) at least one driving condition, which when not fulfilled, indicates that the vehicle (1) is not driving in, or towards, the target area (20), wherein the at least one driving condition is defined by turning characteristics of driving on the road segment (30), and wherein the at least one driving condition comprises at least one required turning angle,
- obtaining (202) from one or more sensors arranged in the vehicle (1), at least one driving parameter of the vehicle (1), wherein the at least one driving parameter of the vehicle (1) is indicative of any one or more out of: a yaw rate of the vehicle (1), a steering wheel angle of the vehicle (1), at least one wheel angle of the vehicle (1), a lateral acceleration of the vehicle (1), and dead reckoning data of the vehicle (1), and
- determining (203) whether the vehicle (1) is driving in, or towards, the target area (20) by determining whether the at least one driving parameter fulfils the at least one driving condition, and wherein determining whether the at least one driving parameter fulfils the at least one driving condition comprises determining whether the at least one driving parameter exceeds the at least one required turning angle.

2. The method according to claim 1, wherein the turning characteristics is defined at least partly by one or more curvatures of the road segment (30).

3. The method according to any of claims 1-2, wherein the turning characteristics is defined at least partly by one or more obstacles (40) arranged in the road segment (30).

4. The method according to any of claims 1-3, wherein the turning characteristics is defined at least partly by a chicane of the road segment (30), wherein the chicane is arranged to require the vehicle (1) to turn at least twice in at least two different directions to drive passed the chicane.

5. The method according to claim 4, wherein determining (203) whether the at least one driving parameter fulfils the at least one driving condition comprises determining whether the vehicle (1) has driven passed the chicane.

6. The method according to any of claims 1-5, wherein the at least one required turning angle comprises a series of consecutive required turning angles.

7. The method according to any of claims 1-6, the method further comprising:
- when determining that the at least one driving parameter fulfils the at least one driving condition, adjusting (204) an operation of the vehicle (1) based on the target area (20).

8. The method according to claim 7, wherein adjusting (204) the operation of the vehicle (1) comprises obtaining a safety level of the target area (20), and adjusting (204) the operation of the vehicle (1) based on the obtained safety level.

9. The method according to any one of claims 7-8, wherein adjusting (204) the operation of the vehicle (1) comprises triggering any one or more out of:
- a reduced maximum speed of the vehicle (1),
- an emergency stop of the vehicle (1),
- an activation of one or more alerting lights on the vehicle (1),
- a sound alert of the vehicle (1),
- an activation of an obstacle avoidance system of the vehicle (1), and
- a reconfiguration of one or more sub-systems of the vehicle (1).

10. The method according to claims 1-9, wherein the least one driving parameter of the vehicle (1) is at least partially obtained over a predefined time period and/or over a predefined distance driven by the vehicle (1).

11. The method according to claims 1-10, wherein the vehicle (1) is at least partly autonomous.

12. The method according to claims 1-11, wherein determining (203) whether the vehicle (1) is driving in, or towards, the target area (20) comprises determining that the vehicle (1) is not driving in, or towards, the target area (20) by determining that the at least one driving parameter does not fulfil the at least one driving condition.

13. A control unit (70) configured to perform the method according to any one of claims 1-12.

14. A vehicle (1) comprising the control unit (70) according to claim 13.

15. A computer program (680) comprising program code means for performing the steps of any one of claims 1-12 when said program is run on a computer.

16. A computer readable medium (690) carrying a computer program (680) comprising program code means for performing the steps of any of claims 1-12 when said program product is run on a computer.

## Patentansprüche

1. Computerimplementiertes Verfahren zum Bestimmen, ob ein Fahrzeug (1), das auf einem Straßensegment (30) fährt, wobei das Straßensegment (30) Teil eines Zielgebiets (20) ist oder zu diesem hin führt, in das Zielgebiet (20) oder zu diesem hin fährt, das Verfahren umfassend:
- Erhalten (201) mindestens einer Fahrbedingung, die, wenn nicht erfüllt, anzeigt, dass das Fahrzeug (1) nicht in das Zielgebiet (20) oder zu diesem hin fährt, wobei die mindestens eine Fahrbedingung durch Abbiegeeigenschaften des Fahrens auf dem Straßensegment (30) definiert ist, und wobei die mindestens eine Fahrbedingung mindestens einen erforderlichen Abbiegewinkel umfasst,
- Erhalten (202) von einem oder mehreren Sensoren, die in dem Fahrzeug (1) angeordnet sind, mindestens eines Fahrparameters des Fahrzeugs (1), wobei der mindestens eine Fahrparameter des Fahrzeugs (1) eines oder mehrere anzeigt aus: einer Gierrate des Fahrzeugs (1), einem Lenkradwinkel des Fahrzeugs (1), mindestens einem Radwinkel des Fahrzeugs (1), einer Querbeschleunigung des Fahrzeugs (1) und Koppelnavigationsdaten des Fahrzeugs (1), und
- Bestimmen (203), ob das Fahrzeug (1) in das Zielgebiet (20) oder zu diesem hin fährt, durch Bestimmen, ob der mindestens eine Fahrparameter die mindestens eine Fahrbedingung erfüllt, und wobei das Bestimmen, ob der mindestens eine Fahrparameter die mindestens eine Fahrbedingung erfüllt, das Bestimmen umfasst, ob der mindestens eine Fahrparameter den mindestens einen erforderlichen Abbiegewinkel überschreitet.

2. Verfahren nach Anspruch 1, wobei die Abbiegeeigenschaften mindestens teilweise durch eine oder mehrere Krümmungen des Straßensegments (30) definiert sind.

3. Verfahren nach einem der Ansprüche 1 bis 2, wobei die Abbiegeeigenschaften mindestens teilweise durch ein oder mehrere Hindernisse (40) definiert sind, die in dem Straßensegment (30) angeordnet sind.

4. Verfahren nach einem der Ansprüche 1 bis 3, wobei die Abbiegeeigenschaften mindestens teilweise durch eine Schikane des Straßensegments (30) definiert sind, wobei die Schikane angeordnet ist, um zu erfordern, dass das Fahrzeug (1) mindestens zweimal in mindestens zwei unterschiedliche Richtungen abbiegt, um an der Schikane vorbeizufahren.

5. Verfahren nach Anspruch 4, wobei das Bestimmen (203), ob der mindestens eine Fahrparameter die mindestens eine Fahrbedingung erfüllt, das Bestimmen umfasst, ob das Fahrzeug (1) an der Schikane vorbeigefahren ist.

6. Verfahren nach einem der Ansprüche 1 bis 5, wobei der mindestens eine erforderliche Abbiegewinkel eine Reihe von aufeinanderfolgenden erforderlichen Abbiegewinkeln umfasst.

7. Verfahren nach einem der Ansprüche 1 bis 6, das Verfahren ferner umfassend:
- bei dem Bestimmen, dass der mindestens eine Fahrparameter die mindestens eine Fahrbedingung erfüllt, Anpassen (204) eines Betriebs des Fahrzeugs (1) basierend auf dem Zielgebiet (20).

8. Verfahren nach Anspruch 7, wobei das Anpassen (204) des Betriebs des Fahrzeugs (1) ein Erhalten eines Sicherheitsniveaus des Zielgebiets (20) und das Anpassen (204) des Betriebs des Fahrzeugs (1) basierend auf dem erhaltenen Sicherheitsniveau umfasst.

9. Verfahren nach einem der Ansprüche 7 bis 8, wobei das Anpassen (204) der Operation des Fahrzeugs (1) ein Auslösen ein beliebiges eines oder beliebige mehrere umfasst von:
- einer reduzierten Höchstgeschwindigkeit des Fahrzeugs (1),
- einer Notbremsung des Fahrzeugs (1),
- einer Aktivierung eines oder mehrerer Warnlichter an dem Fahrzeug (1),
- einer Tonwarnung des Fahrzeugs (1),
- einer Aktivierung eines Hindernisumgehungssystems des Fahrzeugs (1), und
- einer Rekonfiguration eines oder mehrerer Teilsysteme des Fahrzeugs (1).

10. Verfahren nach den Ansprüchen 1 bis 9, wobei der mindestens eine Fahrparameter des Fahrzeugs (1) mindestens teilweise über eine vorgegebene Zeitspanne und/oder über eine vorgegebene Distanz erhalten wird, die von dem Fahrzeug (1) gefahren wird.

11. Verfahren nach den Ansprüchen 1 bis 10, wobei das Fahrzeug (1) mindestens teilweise autonom ist.

12. Verfahren nach den Ansprüchen 1 bis 11, wobei das Bestimmen (203), ob das Fahrzeug (1) in dem Zielgebiet (20) oder zu diesem hin fährt, das Bestimmen umfasst, dass das Fahrzeug (1) nicht in dem Zielgebiet (20) oder zu diesem hin fährt, durch Bestimmen, dass der mindestens eine Fahrparameter die mindestens eine Fahrbedingung nicht erfüllt.

13. Steuereinheit (70), die konfiguriert ist, um das Verfahren nach einem der Ansprüche 1 bis 12 durchzuführen.

14. Fahrzeug (1), umfassend die Steuereinheit (70) nach Anspruch 13.

15. Computerprogramm (680), umfassend Programmcodemittel zum Durchführen der Schritte nach einem der Ansprüche 1 bis 12, wenn das Programm auf einem Computer ausgeführt wird.

16. Computerlesbares Medium (690), das ein Computerprogramm (680) trägt, umfassend Programmcodemittel zum Durchführen der Schritte nach einem der Ansprüche 1 bis 12, wenn das Programmprodukt auf einem Computer ausgeführt wird.

## Revendications

1. Procédé mis en œuvre par ordinateur permettant de déterminer si un véhicule (1) roulant sur un segment routier (30), lequel segment routier (30) fait partie de, ou mène à, une zone cible (20), roule dans, ou en direction de, la zone cible (20), le procédé comprenant :
- l'obtention (201) d'au moins une condition de conduite qui, lorsqu'elle n'est pas remplie, indique que le véhicule (1) ne roule pas dans, ou en direction de, la zone cible (20), dans lequel l'au moins une condition de conduite est définie par des caractéristiques de virage de la conduite sur le segment routier (30), et dans lequel l'au moins une condition de conduite comprend au moins un angle de virage requis,
- l'obtention (202), à partir d'un ou plusieurs capteurs agencés dans le véhicule (1), d'au moins un paramètre de conduite du véhicule (1), dans lequel l'au moins un paramètre de conduite du véhicule (1) indique un quelconque ou plusieurs parmi : une vitesse de lacet du véhicule (1), un angle de volant du véhicule (1), au moins un angle de roue du véhicule (1), une accélération latérale du véhicule (1), et des données de navigation à l'estime du véhicule (1), et
- la détermination (203) du fait de savoir si le véhicule (1) roule dans, ou en direction de, la zone cible (20) en déterminant si l'au moins un paramètre de conduite remplit l'au moins une condition de conduite, et dans lequel la détermination du fait de savoir si l'au moins un paramètre de conduite remplit l'au moins une condition de conduite comprend le fait de déterminer si l'au moins un paramètre de conduite dépasse l'au moins un angle de virage requis.

2. Procédé selon la revendication 1, dans lequel les caractéristiques de virage sont définies au moins en partie par une ou plusieurs courbures du segment routier (30).

3. Procédé selon l'une quelconque des revendications 1 à 2, dans lequel les caractéristiques de virage sont définies au moins en partie par un ou plusieurs obstacles (40) agencés dans le segment routier (30).

4. Procédé selon l'une quelconque des revendications 1 à 3, dans lequel les caractéristiques de virage sont définies au moins en partie par une chicane du segment routier (30), dans lequel la chicane est agencée pour obliger le véhicule (1) à braquer au moins deux fois dans au moins deux directions différentes pour franchir la chicane.

5. Procédé selon la revendication 4, dans lequel la détermination (203) du fait de savoir si l'au moins un paramètre de conduite remplit l'au moins une condition de conduite comprend le fait de déterminer si le véhicule (1) a franchi la chicane.

6. Procédé selon l'une quelconque des revendications 1 à 5, dans lequel l'au moins un angle de virage requis comprend une série d'angles de virage requis consécutifs.

7. Procédé selon l'une quelconque des revendications 1 à 6, le procédé comprenant en outre :
- lorsqu'il est déterminé que l'au moins un paramètre de conduite remplit l'au moins une condition de conduite, l'ajustement (204) d'un fonctionnement du véhicule (1) sur la base de la zone cible (20).

8. Procédé selon la revendication 7, dans lequel l'ajustement (204) du fonctionnement du véhicule (1) comprend l'obtention d'un niveau de sécurité de la zone cible (20), et l'ajustement (204) du fonctionnement du véhicule (1) sur la base du niveau de sécurité obtenu.

9. Procédé selon l'une quelconque des revendications 7 à 8, dans lequel l'ajustement (204) du fonctionnement du véhicule (1) comprend le déclenchement d'un ou plusieurs quelconques parmi :
- une vitesse maximale réduite du véhicule (1),
- un arrêt d'urgence du véhicule (1),
- une activation d'un ou plusieurs feux d'alerte sur le véhicule (1),
- une alerte sonore du véhicule (1),
- une activation d'un système d'évitement d'obstacles du véhicule (1), et
- une reconfiguration d'un ou plusieurs sous-systèmes du véhicule (1).

10. Procédé selon les revendications 1 à 9, dans lequel l'au moins un paramètre de conduite du véhicule (1) est au moins partiellement obtenu sur une période de temps prédéfinie et/ou sur une distance prédéfinie parcourue par le véhicule (1).

11. Procédé selon les revendications 1 à 10, dans lequel le véhicule (1) est au moins partiellement autonome.

12. Procédé selon les revendications 1 à 11, dans lequel la détermination (203) du fait de savoir si le véhicule (1) roule dans, ou en direction de, la zone cible (20) comprend le fait de déterminer que le véhicule (1) ne roule pas dans, ou en direction de, la zone cible (20) en déterminant que l'au moins un paramètre de conduite ne remplit pas l'au moins une condition de conduite.

13. Unité de commande (70) configurée pour effectuer le procédé selon l'une quelconque des revendications 1 à 12.

14. Véhicule (1) comprenant l'unité de commande (70) selon la revendication 13.

15. Programme informatique (680) comprenant des moyens de code de programme pour effectuer les étapes selon l'une quelconque des revendications 1 à 12 lorsque ledit programme est exécuté sur un ordinateur.

16. Support lisible par ordinateur (690) contenant un programme informatique (680) comprenant des moyens de code de programme pour effectuer les étapes selon l'une quelconque des revendications 1 à 12 lorsque ledit produit programme est exécuté sur un ordinateur.
